# EUROPEAN PATENT SPECIFICATION

(11) **EP 4 055 268 B1**
(45) Date of publication and mention of the grant of the patent: **22.02.2023**
(21) Application number: 20806929.4
(22) Date of filing: 05.11.2020
(51) Int. Cl.: F03D 1/06, F03D 7/02

(54) **A METHOD FOR HANDLING ROTOR UNBALANCE OF A WIND TURBINE WITH HINGED WIND TURBINE BLADES**
VERFAHREN ZUM HANDHABEN DER ROTORUNWUCHT EINER WINDTURBINE MIT ANGELENKTEN WINDTURBINENBLÄTTERN
PROCÉDÉ DE MANIPULATION DE DÉSÉQUILIBRE DE ROTOR D'UNE ÉOLIENNE À PALES D'ÉOLIENNE ARTICULÉES

(30) Priority: 06.11.2019 DK PA201970683
(43) Date of publication of application: 14.09.2022
(73) Proprietor: VESTAS WIND SYSTEMS A/S, 8200 Aarhus N (DK)
(72) Inventor: NIELSEN, Thomas S. Bjertrup, 8940 Randers SV (DK); JØRGENSEN, Brian, 8464 Galten (DK); SØRENSEN, Kim Hylling, 8000 Århus C (DK); NETO, Julio Xavier Vianna, 8200 Århus N (DK)
(74) Representative: Vestas Patents Department
(86) International application number: PCT/DK2020/050301
(87) International publication number: WO 2021/089097

(56) References cited:
- EP-A2- 1 630 415
- US-A- 4 456 429
- US-A- 4 533 297
- US-A1- 2003 223 868
- US-A1- 2010 226 772

## Description

### FIELD OF THE INVENTION

The present invention relates to a method for operating a wind turbine with hinged wind turbine blades. More particularly, the method according to the invention allows rotor unbalance of the wind turbine to be handled.

### BACKGROUND OF THE INVENTION

Wind turbines are normally controlled in order to provide a desired power output and in order to control loads on the wind turbine. For horizontal axis wind turbines, i.e. wind turbines with a rotor which rotates about a substantially horizontal rotor axis, this may be obtained by controlling a pitch angle of the wind turbine blades. In this case the angle of attack of the wind turbine blades relative to the incoming wind is adjusted by rotating the wind turbine blades about a longitudinal axis.

As an alternative, wind turbine may be provided with wind turbine blades which are connected to a blade carrying structure via hinges, thereby allowing a pivot angle defined between the wind turbine blades and the blade carrying structure to be varied. In such wind turbines the diameter of the rotor of the wind turbine, and thereby the area swept by the rotor, is varied when the pivot angle is varied. An example of such a wind turbine is disclosed in US 4,632,637.

During operation of a wind turbine, rotor unbalance may occur, in the sense that forces acting on the wind turbine blades differ from one wind turbine blade to another. This may lead to undesired uneven loads on various parts of the wind turbine, and it is therefore desirable to avoid rotor unbalance to the greatest possible extent. Rotor unbalance may originate from various causes, including, but not limited to, varying operating parameters for the wind turbine blades, varying design features of the wind turbine blades, yaw errors, ice formation on the wind turbine blades, etc. Document US2010/0226772 is a wind turbine comprising blades that can pivot.

### DESCRIPTION OF THE INVENTION

It is an object of embodiments of the invention to provide a method for operating a wind turbine with hinged wind turbine blades, in which rotor unbalance is handled in an efficient and reliable manner.

It is a further object of embodiments of the invention to provide a method for operating a wind turbine with hinged wind turbine blades, in which rotor unbalance is handled regardless of the origin of the rotor unbalance.

The invention provides a method for operating a wind turbine, the wind turbine comprising a tower, a nacelle mounted on the tower via a yaw system, a hub mounted rotatably on the nacelle, the hub comprising a blade carrying structure, and one or more wind turbine blades connected to the blade carrying structure via a hinge, each wind turbine blade thereby being arranged to perform pivot movements relative to the blade carrying structure between a minimum pivot angle and a maximum pivot angle, the wind turbine further comprising an adjustable biasing mechanism arranged to apply an adjustable biasing force to each wind turbine blade which biases the wind turbine blade towards a position defining minimum pivot angle or towards a position defining maximum pivot angle so that the pivot angle of each wind turbine blade is a result of the balancing between at least the adjustable biasing force and a wind load force acting on the respective wind turbine blade the method comprising the steps of:
- selecting a biasing force for each wind turbine blade and applying the selected biasing force to the respective wind turbine blades,
- operating the wind turbine while monitoring rotor unbalance of the wind turbine,
- in the case that the rotor unbalance exceeds a first threshold value:
   - selecting at least one of the wind turbine blades, and
   - adjusting the biasing force applied to the selected wind turbine blade(s).

Thus, the method of the invention is a method for operating a wind turbine. In the present context the term 'wind turbine' should be interpreted to mean a construction which is capable of extracting energy from the wind and transforming it into electrical energy.

The wind turbine comprises a tower, a nacelle, a hub and one or more wind turbine blades. The nacelle is mounted on the tower via a yaw system, thereby allowing the nacelle to be rotated relative to the tower in order to direct the wind turbine blades in accordance with the direction of the wind. The yaw system may be an active yaw system in which the nacelle is rotated actively by means of a yaw drive mechanism, e.g. on the basis of measurements of the wind direction. As an alternative, the yaw system may be a passive yaw system in which the nacelle automatically rotates according to the wind direction without the use of a yaw drive mechanism. As another alternative, the yaw system may be a combination of an active yaw system and a passive yaw system, in the sense that it may operate actively under some circumstances and passively under other circumstances.

The hub comprises a blade carrying structure, and the wind turbine blades are connected to the blade carrying structure via a hinge. Thereby each of the wind turbine blades is arranged to perform pivot movements relative to the blade carrying structure, via the hinge. A pivot angle is thereby defined between each wind turbine blade and the blade carrying structure, depending on the position of the hinge and thereby of the wind turbine blade relative to the blade carrying structure. Accordingly, the pivot angle defines the direction along which a given wind turbine blade extends relative to the blade carrying structure, and thereby relative to the hub. This, in turn, determines the diameter of the rotor, and thereby the ability of the wind turbine to extract energy from the wind.

The pivot angle can vary between a minimum pivot angle, defining a maximum or near maximum rotor diameter, and a maximum pivot angle, defining a minimum or near minimum rotor diameter. Positioning the wind turbine blades at maximum pivot angle is sometimes referred to as 'barrel mode'.

Thus, the wind turbine is of a kind which comprises hinged wind turbine blades. The hinge may be or comprise a bearing, e.g. in the form of a journal bearing, a roller bearing, or any other suitable kind of bearing.

The hub is mounted rotatably on the nacelle. Since the wind turbine blades are mounted on the hub, they rotate along with the hub, relative to the nacelle.

The wind turbine further comprises an adjustable biasing mechanism arranged to apply an adjustable biasing force to each wind turbine blade. The biasing force biases the wind turbine blades towards a position defining minimum pivot angle or towards a position defining maximum pivot angle.

In the case that the biasing mechanism biases the wind turbine blades towards a position defining minimum pivot angle, pivot movements of the wind turbine blades towards larger pivot angles are performed against the biasing force. Furthermore, if no other forces act on the wind turbine blades, the biasing force will cause the wind turbine blades to be positioned at the minimum pivot angle.

Similarly, in the case that the biasing mechanism biases the wind turbine blades towards a position defining maximum pivot angle, pivot movements of the wind turbine blades towards smaller pivot angles are performed against the biasing force. Furthermore, if no other forces act on the wind turbine blades, the biasing force will cause the wind turbine blades to be positioned at the maximum pivot angle, i.e. in barrel mode.

In any event, the pivot angle of the wind turbine blades is defined by the biasing force applied thereto in combination with any other forces, such as aerodynamic forces, centrifugal forces, thrust forces originating from wind pressure, etc. Since the biasing force is adjustable, it is possible to adjust how large an oppositely directed force is required in order to move the wind turbine blades away from the minimum pivot angle or the maximum pivot angle.

The biasing force could, e.g., be applied by means of wires attached to the inner blade parts or the outer blade parts of the wind turbine blades, which pull the wind turbine blades outwards, i.e. towards the minimum pivot angle, or inwards, i.e. towards the maximum pivot angle. In this case the biasing force can be adjusted by adjusting the pulling force applied by the wires.

As an alternative, the biasing force could be applied by means of one or more springs acting on the wind turbine blades, e.g. compressible springs arranged for pulling or pushing the wind turbine blades towards the minimum pivot angle or towards the maximum pivot angle. In this case the biasing force can, e.g., be adjusted by means of pulleys or hydraulic actuators mounted in the hub, in the blade carrying structure, in the wind turbine blade itself, in the nacelle or in the tower.

As another alternative, the biasing force could be in the form of a moment. In this case the biasing force could be applied by means of a torsional spring arranged in the hinge which pulls or pushes the wind turbine blades towards the minimum pivot angle or towards the maximum pivot angle. In this case the biasing force may also be adjusted by varying the torsional moment, e.g. by means of pulleys or hydraulic actuators mounted in the hub, in the blade carrying structure, in the wind turbine blade itself, in the nacelle or in the tower.

As another alternative, the biasing force could be applied by means of hydraulic mechanisms connected to the wind turbine blades and being arranged for pulling or pushing the wind turbine blades towards the minimum pivot angle or towards the maximum pivot angle. In this case the biasing force can be adjusted by adjusting the pressure in the hydraulic mechanisms.

In the method according to the invention, a biasing force is initially selected for each wind turbine blade, and the selected biasing force is applied to the respective wind turbine blade. As described above, this results in each wind turbine blade being positioned at a pivot angle being the result of a balancing between the biasing force and any other forces acting on the respective wind turbine blade, including aerodynamic forces, centrifugal forces caused by rotation of the hub, etc.

Thus, the adjustable biasing mechanism is arranged so that the pivot angle of each wind turbine blade is a result of the balancing between at least the biasing force and a wind load force acting on the respective wind turbine blade, wherein the wind load force comprises any other forces acting on the respective wind turbine blade, including aerodynamic forces, centrifugal forces caused by rotation of the hub, etc.

The pivot angle is therefore adjustable by the biasing force, but adjusting the pivot angle by use of the biasing mechanism does not necessarily imply that the pivot angle is controlled to approach a desired pivot angle. Adjusting the biasing force merely implies that the actual pivot angle can be affected by the biasing force, but where the resulting pivot angle depends on the force balance between the biasing force and, the wind load force and elastic properties of the biasing mechanism.

For example, with a given selected biasing force or a set-point for a desired biasing force, the force balance implies that an increased wind speed and thereby increased wind thrust leads to an increase of the pivot angle. This has the advantage that the rotor area decreases in response to a wind gust and consequently increases in response wind speed reductions.

Thus, it may be an advantage that the pivot angle is not controlled according to a pivot angle set-point, but adapts according to the force balance.

Identical biasing forces may be selected and applied to all of the wind turbine blades. As an alternative, the biasing forces may be selected in such a manner that the wind turbine blades are expected to be positioned at identical pivot angles, when taking known differences in the forces acting on the wind turbine blades into account. Such known differences could, e.g., originate from various azimuth positions of the wind turbine blades and/or from known structural differences, such as differences in spring characteristics, hydraulic cylinder operation, leading edge corrosion, blade fouling, etc.

Next, the wind turbine is operated with the applied biasing forces. During operation, rotor unbalance of the wind turbine is monitored. In the present context the term 'rotor unbalance' should be interpreted to mean an unbalance in forces acting on the rotor, including the wind turbine blades, the blade carrying structure and the hub, across the rotor plane. The rotor unbalance may be monitored by monitoring a suitable parameter which is indicative for the occurrence and the magnitude of a rotor unbalance. This could, e.g., include monitoring the pivot angles, accelerations and/or deflections of relevant parts of the wind turbine, torque on relevant parts of the wind turbine, etc. This will be described in further detail below.

As described above, rotor unbalance may lead to undesired uneven loads on various parts of the wind turbine, and it is therefore desirable to minimise rotor unbalance. Therefore, in the case that it is revealed that the rotor unbalance exceeds a first threshold value, at least one of the wind turbine blades is selected, and the biasing force applied to the selected wind turbine blade(s) is adjusted. The first threshold value is related to the relevant parameter being monitored, and may correspond to a level of rotor unbalance, beyond which there is a risk that the uneven loads caused by the rotor unbalance may cause damage to the wind turbine.

The selection of the wind turbine blade(s) may be performed in an arbitrary manner, e.g. simply selecting a random wind turbine blade. Alternatively, a wind turbine blade may be selected which is considered most likely to be affected by forces acting thereon in a manner which differs from the other wind turbine blades. Thereby it is more likely that adjusting the biasing force of this wind turbine blades results in a reduction of the rotor unbalance than adjusting the biasing force of any of the other wind turbine blades would. This will be described in further detail below.

By adjusting the biasing force applied to the selected wind turbine blade(s), the balancing between the biasing force and any other forces acting on the selected wind turbine blade(s) is changed. Accordingly, the resulting pivot angle for the selected wind turbine blade(s) is also changed. However, the biasing force applied to the wind turbine blades which were not selected is not adjusted. Accordingly, the mutual difference or similarity of pivot angles among the wind turbine blades is changed. For instance, the adjustment of the biasing force applied to the selected wind turbine blade(s) may cause the pivot angle of the selected wind turbine blade(s) to approach the pivot angle of the non-selected wind turbine blades.

The adjustment of the biasing force may comprise increasing the biasing force or decreasing the biasing force. In the case that the biasing force biases the wind turbine blade towards minimum pivot angle, a decrease in the biasing force will cause the wind turbine blade to be biased towards minimum pivot angle to a lesser extent, causing the wind turbine blade to move towards larger pivot angles if no other forces are changed, whereas an increase in the biasing force will cause the wind turbine blade to be biased further towards minimum pivot angle, causing the wind turbine blade to move towards smaller pivot angles if no other forces are changed.

Similarly, in the case that the biasing force biases the wind turbine blade towards maximum pivot angle, a decrease in the biasing force will cause the wind turbine blade to be biased towards maximum pivot angle to a lesser extent, causing the wind turbine blade to move towards smaller pivot angles if no other forces are changed, whereas an increase in the biasing force will cause the wind turbine blade to be biased further towards maximum pivot angle, causing the wind turbine blade to be moved towards larger pivot angles if no other forces are changed.

Thus, according to the method of the invention, when a rotor unbalance exceeding a given threshold is detected, it is attempted to alleviate the rotor unbalance by adjusting the biasing force applied to at least one of the wind turbine blades, thereby changing the difference in pivot angle among the wind turbine blades. This is done regardless of the cause leading to the rotor unbalance. However, it is not ruled out that an investigation is made regarding a likely cause of the rotor unbalance prior to selecting at least one wind turbine blade and/or the step of adjusting the biasing force, in order to select an approach which is most likely to succeed.

The method may be performed continuously or at regular intervals during normal operation of the wind turbine. In this case the method may be considered as a 'fine tuning' of the wind turbine with respect to rotor unbalance. This will mainly address rotor unbalance issues which appear and/or develop over time when the wind turbine operates, for instance rotor unbalance originating from uneven wear on various parts of the wind turbine, ice formation on the wind turbine blades, yaw errors, etc.

Alternatively or additionally, the method may be performed as part of the commissioning of the wind turbine. This will mainly address rotor unbalance issues which originate from variations in design, manufacture and adjustment among various parts of the wind turbine, in particular parts related to the various wind turbine blades. This could, e.g., include variations in stiffness, spring characteristics, tuning, etc. of the biasing mechanisms. Thereby systematic rotor unbalances can be detected and eliminated before the wind turbine is put into production.

The step of monitoring rotor unbalance of the wind turbine may comprise monitoring the pivot angle of each wind turbine blade. As described above, the pivot angles of the wind turbine blades represent a balance between the biasing force applied to the wind turbine blades and any other forces acting on the wind turbine blades. Variations in pivot angle from one wind turbine blade to another may indicate a difference in resulting force acting on the wind turbine blades, thereby indicating rotor unbalance.

The pivot angles per se may, thus, be the monitored parameter. As an alternatively, the monitored parameter may be a difference in mean pivot angle among the wind turbine blades, a large difference indicating rotor unbalance. As another alternative, the monitored parameter may be a standard deviation of the pivot angles, a large standard deviation suggesting that the pivot angles variate significantly, e.g. during a full turn of the rotor, thereby indicating rotor unbalance. As yet another alternative, the monitored parameter may be a time derivative of the pivot angles, fast changes of the pivot angles indicating rotor unbalance. As yet another alternative, the frequency content of the pivot angle data may be analysed, for instance by performing Fast Fourier analysis, thereby obtaining a power spectrum. In the case that the energy corresponding to specific frequencies increases, e.g. at a frequency corresponding to 1P, this is an indication that a rotor unbalance is occurring.

Alternatively, a parameter related to the biasing mechanism may be monitored. For instance, in the case that the biasing mechanism is of a kind which comprises hydraulic mechanisms, a difference in pressure prevailing in the hydraulic mechanisms and/or in position of hydraulic pistons among the wind turbine blades could be monitored. In this case, a large difference indicates rotor unbalance.

The selected biasing force may be applied as a set-point for a desired biasing force for the wind turbine blades. The biasing mechanism may therefore be arranged to be controlled via a control system such as feedback control system arranged to adjust to the biasing force towards the selected biasing force subject to minimizing a difference between a measured biasing force and the selected biasing force.

Thus, the method may further comprise the step of determining that the rotor unbalance exceeds the first threshold value in the case that a difference in pivot angle between at least two wind turbine blades exceeds a predefined threshold value. As described above, a difference in pivot angle, e.g. a difference in mean pivot angle, from one wind turbine blade to another may be the result of a difference in resulting force acting on the wind turbine blades. This may lead to rotor unbalance. Such a difference in pivot angle may be caused by a difference in the characteristics of the biasing mechanisms of the wind turbine blades, e.g. due to a difference in stiffness and/or a difference in the tuning of the biasing mechanisms. In this case the rotor unbalance can be eliminated, or at least reduced, by adjusting the biasing force applied to at least one of the wind turbine blades in such a manner that these differences are taken into account.

The step of selecting at least one wind turbine blade may comprise selecting the wind turbine blade having a pivot angle which differs most from the pivot angles of any of the other wind turbine blades. If one of the wind turbine blades has a pivot angle which is significantly different from the pivot angles of the other wind turbine blades, then this wind turbine blade may very likely be the cause of the rotor unbalance. Thereby, by adjusting the biasing force applied to this wind turbine blade in such a manner that the pivot angle approaches the pivot angles of the other wind turbine blades, the rotor unbalance may be eliminated or at least reduced.

Alternatively or additionally, the step of monitoring rotor unbalance of the wind turbine may comprise monitoring accelerations of the nacelle and/or an upper part of the tower along at least one direction. This could, e.g., be performed by means of one or more accelerometers arranged in the nacelle, on the hub, on the blade carrying structure, on an upper part of the tower, and/or in any other suitable position. Alternatively, the accelerations may be measured in another manner, e.g. using a camera.

Rotor unbalance may cause the upper part of the wind turbine, i.e. the nacelle and the part of the tower where the nacelle is mounted, to oscillate, e.g. in accordance with the rotational movement of the hub, and thereby the rotor. Such oscillations give rise to accelerations of the nacelle and the upper part of the tower. Accordingly, when such accelerations occur, it is an indication of rotor unbalance.

The accelerations may be measured along the direction of the wind and/or along a direction being substantially perpendicular to the direction of the wind.

As an alternative, deflections of the upper part of the tower, the blade carrying structure and/or the wind turbine blades may be monitored, e.g. by means of strain gauges, optic fibres, or any other suitable means. Deflections above a certain level may indicate rotor unbalance.

As another alternative, a torque of the main shaft and/or the generator shaft may be monitored, e.g. using strain gauges or the like mounted on the shaft. As an alternative, the torque of the generator shaft may be derived from a generator moment signal provided by the converter. This could, e.g., include monitoring the frequency contents of the measured torque signal. For instance, a power spectrum may be obtained, and if the energy content corresponding to specific frequencies, e.g. a frequency corresponding to 1P, this is an indication that rotor unbalance is occurring.

The step of adjusting the biasing force applied to the selected wind turbine blade(s) may comprise adjusting a pulling force applied to a wire connected to each selected wind turbine blade. According to this embodiment, the biasing mechanism is of a kind with comprises a wire connected to each wind turbine blade in such a manner that the wind turbine blade can be pulled towards minimum pivot angle or towards maximum pivot angle by applying a pulling force by means of the wire. Thereby adjusting the pulling force results in a corresponding adjustment of the biasing force.

As an alternative, in the case that the biasing mechanism is of a kind comprising hydraulic mechanisms, the biasing force may be adjusted by adjusting a pressure in the hydraulic mechanisms.

The method may further comprise the steps of:
- after adjusting the biasing force applied to the selected wind turbine blade(s), monitoring the rotor unbalance of the wind turbine,
- in the case that the rotor unbalance decreases, adjusting the biasing force applied to the selected wind turbine blade(s) further, and
- in the case that the rotor unbalance increases, reversing the adjustment of the biasing force applied to the selected wind turbine blade(s).

According to this embodiment, when the biasing force applied to the selected wind turbine blade(s) has been adjusted, as described above, the wind turbine is operated normally, while the rotor unbalance of the wind turbine is monitored, essentially as described above. Thereby the impact of the adjusted biasing force on the rotor unbalance is investigated. More particularly, it is investigated whether the rotor unbalance has been increased or decreased. And in the case that the rotor unbalance has decreased, it is investigated whether the decrease is sufficient or further measures needs to be taken.

Accordingly, if it turns out that the rotor unbalance decreases as a result of the adjustment of the biasing force, it can be concluded that the adjustment of the biasing force has a desired effect. Therefore, in this case the biasing force is adjusted further in the same manner. Thus, if the biasing force was initially decreased, it is now decreased further, and if the biasing force was initially increased, it is now increased further.

On the other hand, if it turns out that the rotor unbalance increases as a result of the adjustment of the biasing force, it can be concluded that the adjustment of the biasing force is in fact making the rotor unbalance worse. Therefore, in this case the adjustment of the biasing force is reversed, i.e. the biasing force which was applied before the adjustment was performed is restored.

According to this embodiment, the rotor unbalanced may be handled in an incremental manner, where it is initially tested whether or not an adjustment of the biasing force applied to a given wind turbine blade will have the desired effect on the rotor unbalance, by applying a small adjustment, and then monitoring the rotor unbalance to investigate whether or not the rotor unbalance changes in the right direction. If it appears that the applied adjustment is beneficial, a larger adjustment can be applied. On the other hand, if it appears that the applied adjustment is increasing the rotor unbalance, the small adjustment can be reversed without causing too much damage.

Alternatively or additionally, the method may further comprise the steps of:
- after adjusting the biasing force applied to the selected wind turbine blade(s), monitoring the rotor unbalance of the wind turbine,
- in the case that the rotor unbalance increases or remains unchanged, selecting at least one further wind turbine blade, and
- adjusting the biasing force applied to the further wind turbine blade(s).

According to this embodiment, the wind turbine is also operated normally, while the rotor unbalance of the wind turbine is monitored, after the initial adjustment of the biasing force, similarly to the embodiment described above.

However, according to this embodiment, if it turns out that the rotor unbalance increases or remains unchanged, it can be concluded that the performed adjustments of the biasing force have either had no effect on the rotor unbalance, or have even had a detrimental effect on the rotor unbalance. It is therefore unlikely that further similar adjustments of the biasing force applied to the initially selected wind turbine blade(s) will reduce the rotor unbalance. Therefore, when this is the case, at least one further wind turbine blade is selected, and the biasing force applied to the further wind turbine blade(s) is adjusted.

Thus, in the case that adjustment of the biasing force applied to the initially selected wind turbine blade(s) does not have the desired effect on the rotor unbalance, it may be because the initially selected wind turbine blade(s) are in fact not the ones which cause the rotor unbalance. However, adjusting the biasing force applied to at least one of the other wind turbine blades might reduce the rotor unbalance, and therefore this is attempted.

The method may further comprise the step of stopping the wind turbine in the case that the rotor unbalance exceeds a second threshold value, the second threshold value being larger than the first threshold value.

In some cases the rotor unbalance may be so significant that it is not possible to reduce it to an acceptable level by adjusting the biasing force applied to the wind turbine blades. Furthermore, the cause of the rotor unbalance may be of a kind which is not related to the pivot angles of the wind turbine blades, for instance ice formation on at least some of the wind turbine blades, and thereby it may not be possible to reduce the rotor unbalance by adjusting the biasing force applied to the wind turbine blades. Finally, the cause of the rotor unbalance may be of a kind which is likely to cause damage to the wind turbine, or which may require service. Therefore, when this occurs, the wind turbine may be stopped as a safety precaution, and in order to prevent damage to the wind turbine.

The first threshold value may be variable as a function of ambient temperature and/or humidity. According to this embodiment, the first threshold value is not a fixed value, but rather depends on the prevailing ambient conditions in the form of the ambient temperature and/or humidity.

Temperature and/or humidity conditions may affect the wind turbine in a manner which may cause rotor unbalance. For instance, if the temperature is below 0°C, there is a risk of ice formation on the wind turbine blades, in particular if the humidity is also above a certain level and/or if the temperature has been low for a certain period of time. Therefore, if rotor unbalance is detected under such circumstances, it may be desirable to react fast, i.e. to apply a low threshold value. Furthermore, if adjusting the biasing force applied to one or more of the wind turbine blades turns out to be ineffective with respect to reducing the rotor unbalance, it is likely that the rotor unbalance is caused by ice formation on one or more of the wind turbine blades. Therefore, instead of continuing to attempt to reduce the rotor unbalance by further adjusting the biasing force, the wind turbine may be stopped and a de--icing procedure may be run.

The step of adjusting the biasing force applied to the selected wind turbine blade(s) may be performed based on ambient temperature and/or humidity. For instance, if the temperature and/or humidity conditions are such that it is likely that the rotor unbalance is caused by ice formation on one or more of the wind turbine blades, the biasing force may be adjusted in a manner which causes a further increase of the pivot angle, thereby moving the selected wind turbine blade towards barrel mode, possibly to an extent which even stops the wind turbine.

Alternatively or additionally, other ambient conditions, e.g. wind speed, may be taken into account with respect to the first threshold value and/or with respect to the adjustment of the biasing force. For instance, it may be desirable to apply a lower threshold value and/or a more aggressive adjustment of the biasing force at high wind speeds than at low wind speeds, because damage on the wind turbine, due to rotor unbalance, is more likely at high wind speeds than at low wind speeds.

Thus, information regarding the ambient conditions, such as temperature, humidity and/or wind speed, can be used for determining a likely cause of the rotor unbalance, and thereby for determining which actions are most likely to cause a reduction of the rotor unbalance.

The wind turbine may advantageously be a downwind wind turbine, i.e. the wind turbine may be of a kind in which the incoming wind passes the nacelle and the tower before reaching the rotor.

### BRIEF DESCRIPTION OF THE DRAWINGS

The invention will now be described in further detail with reference to the accompanying drawings in which
Figs. 1-3 illustrate a wind turbine being controlled in accordance with a method according to a first embodiment of the invention,
Figs. 4-6 illustrate a wind turbine being controlled in accordance with a method according to a second embodiment of the invention,
Figs. 7 and 8 show details of a biasing mechanism for use in a method according to an embodiment of the invention,
Fig. 9 is a block diagram illustrating a method according to an embodiment of the invention, and
Fig. 10 is a flow chart illustrating a method according to an embodiment of the invention.

### DETAILED DESCRIPTION OF THE DRAWINGS

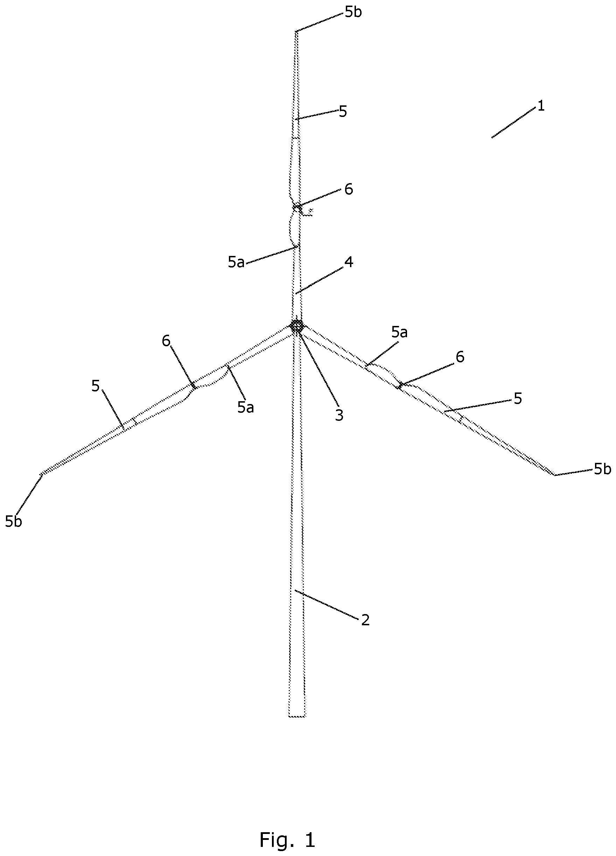

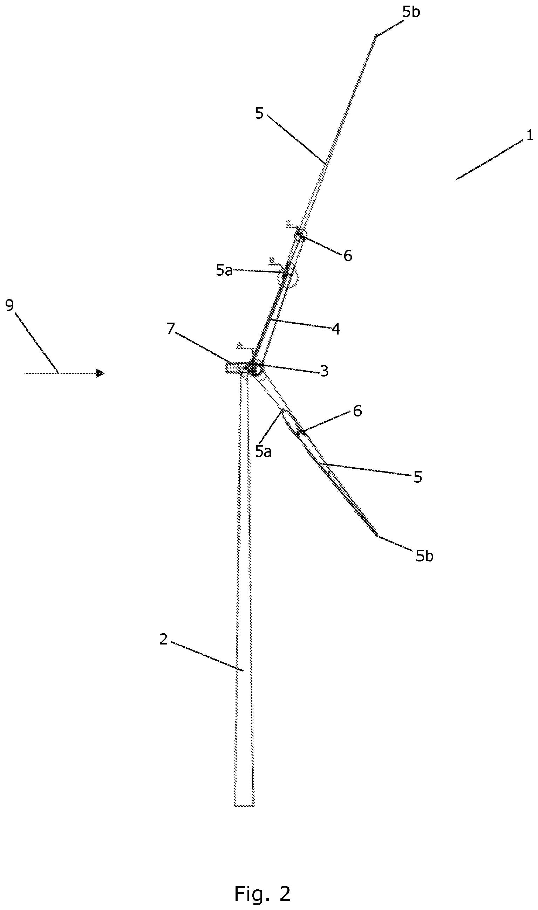

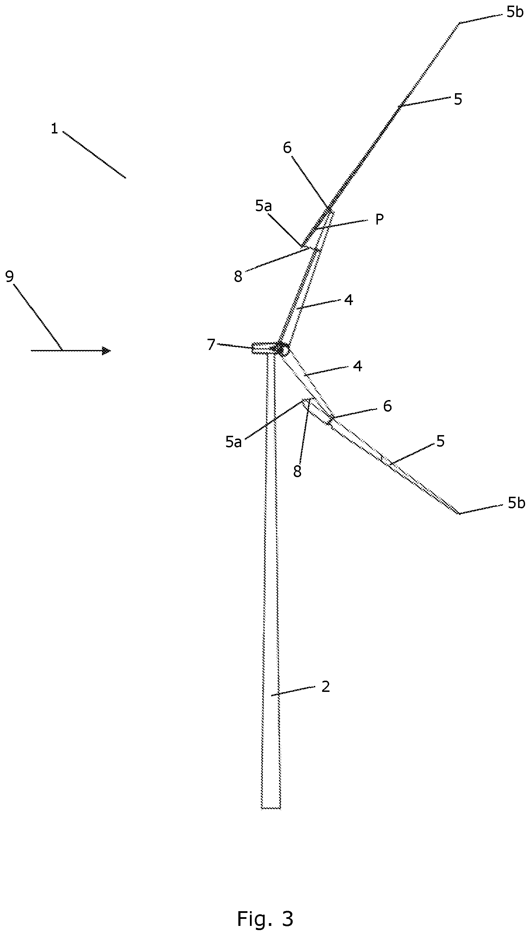

Figs. 1-3 illustrate a wind turbine 1 being controlled in accordance with a method according to a first embodiment of the invention. Fig. 1 is a front view of the wind turbine 1, and Figs. 2 and 3 are side views of the wind turbine 1.

The wind turbine 1 of Figs. 1-3 comprises a tower 2 and a nacelle 7 mounted on the tower 2. A hub 3 is mounted rotatably on the nacelle 7, the hub 3 comprising a blade carrying structure 4 with three arms. A wind turbine blade 5 is connected to each of the arms of the blade carrying structure 4 via a hinge 6. Thus, the wind turbine blades 5 rotate along with the hub 3, relative to the nacelle 7, and the wind turbine blades 5 can perform pivoting movements relative to the blade carrying structure 4, via the hinges 6.

Each wind turbine blade 5 defines an aerodynamic profile extending along the length of the wind turbine blade 5 between an inner tip end 5a and an outer tip end 5b. The hinge 6 is arranged at a hinge position of the wind turbine blade 5, the hinge position being at a distance from the inner tip end 5a as well as at a distance from the outer tip end 5b. The wind turbine blades 5 of the wind turbine 1 of Figs. 1-3 are straight in the sense that an inner portion of the wind turbine blade 5, between the hinge 6 and the inner tip end 5a, and an outer portion of the wind turbine blade 5, between the hinge 6 and the outer tip end 5b, extend along the same direction, i.e. an angle is not formed between the inner and outer portions of the wind turbine blade 5.

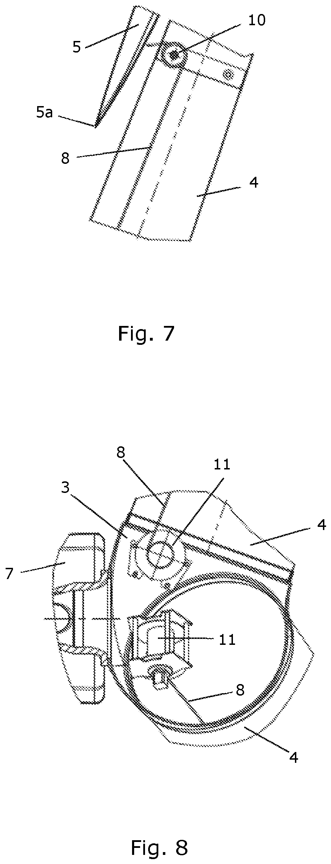

A biasing mechanism comprising wires 8 attached to the wind turbine blades 5 at a position near the inner tip end 5a applies a biasing force to the wind turbine blades 5 which pulls the wind turbine blades 5 towards a position defining minimum pivot angle, and thereby maximum rotor diameter. This will be described in further detail below with reference to Figs. 7 and 8.

In Fig. 2 the wind turbine blades 5 are positioned at the minimum pivot angle, i.e. at a pivot angle which results in a maximum rotor diameter of the wind turbine 1.

In Fig. 3 the wind turbine blades 5 are positioned at a larger pivot angle P than the minimum pivot angle illustrated in Fig. 2. Thereby the rotor diameter of the wind turbine 1 is smaller in the situation illustrated in Fig. 3 than in the situation illustrated in Fig. 2.

The wind turbine 1 of Figs. 1-3 is a downwind wind turbine, i.e. the wind direction relative to the wind turbine 1 is illustrated by arrow 9 shown in Figs. 2 and 3.

The wind turbine 1 of Figs. 1-3 may be operated in the following manner. Initially, a biasing force is selected for each of the wind turbine blades 5, and the biasing mechanism 8 is adjusted to apply the selected biasing force to the respective wind turbine blade 5. Thereby the wind turbine blades 5 are pulled towards the position shown in Fig. 2.

Next, the wind turbine 1 is operated, while rotor unbalance of the wind turbine 1 is monitored. This could, e.g., include monitoring the pivot angles of the wind turbine blades 5, accelerations of the nacelle 7 and/or an upper part of the tower 2, deflections of the nacelle 7 and/or the upper part of the tower 2, torque on a main shaft and/or a generator shaft, etc., as described above.

In the case that the rotor unbalance exceeds a first threshold value, at least one of the wind turbine blades 5 is selected. For instance, a wind turbine blade 5 having a pivot angle which differs significantly from the pivot angles of the other wind turbine blades 5 may be selected. The biasing force applied to the selected wind turbine blade(s) is then adjusted in order to attempt to eliminate, or at least reduce, the rotor unbalance. This may include increasing or reducing the biasing force, depending on the nature of the detected rotor unbalance.

If the adjustment of the biasing force applied to the selected wind turbine blade(s) causes a reduction in the rotor unbalance, further adjustment of the biasing force applied to the selected wind turbine blade(s), in the same direction, may be performed until the rotor unbalance has been eliminated. On the other hand, if the adjustment of the biasing force causes an increase in the rotor unbalance, the performed adjustment may be reversed and/or one of the other wind turbine blades 5 may be selected, and the biasing force applied to this wind turbine blade 5 may be adjusted.

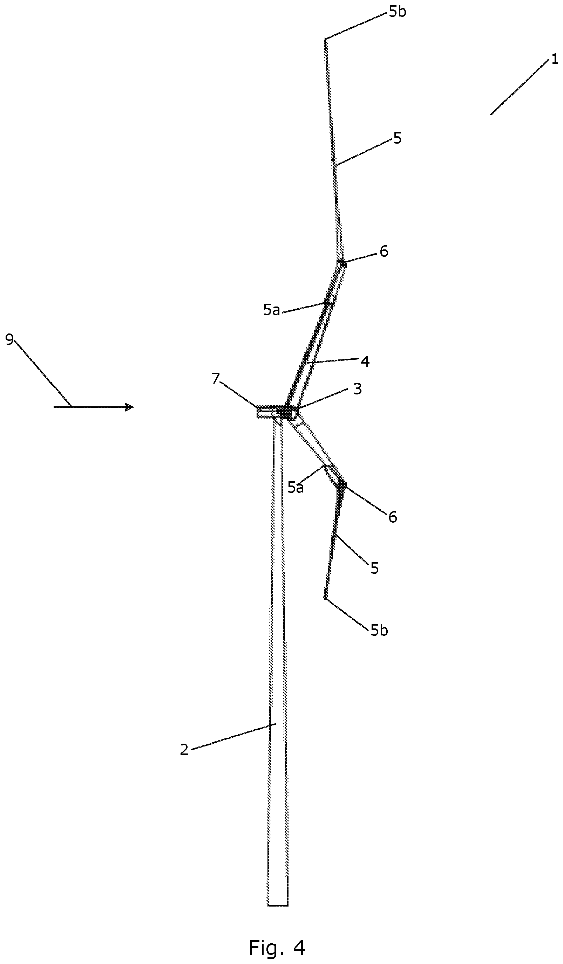

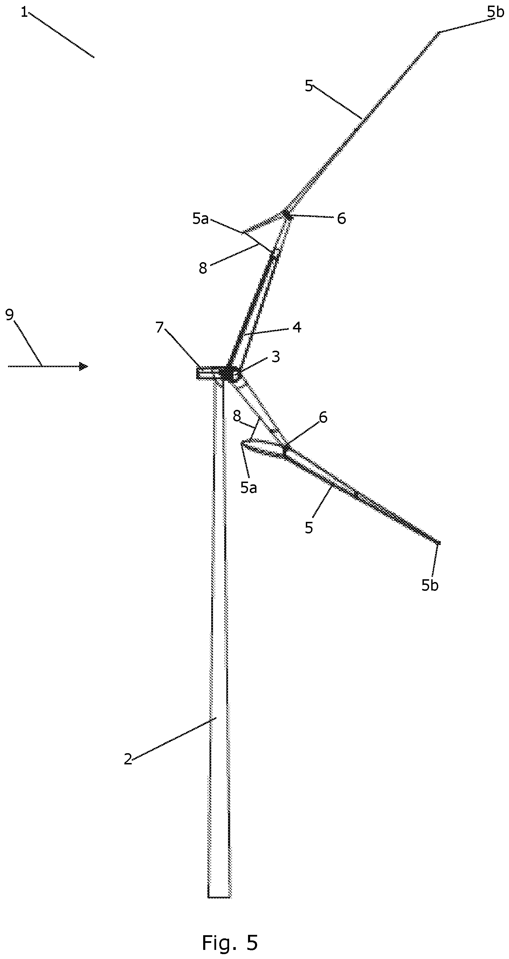

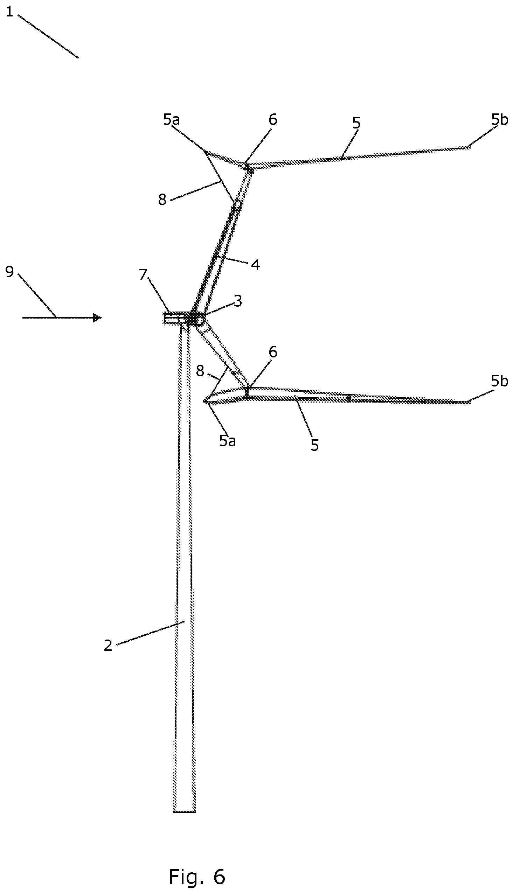

Figs. 4-6 illustrate a wind turbine 1 being controlled in accordance with a method according to a second embodiment of the invention. The wind turbine 1 of Figs. 4-6 is very similar to the wind turbine 1 of Figs. 1-3, and will therefore not be described in detail here. Figs. 4-6 are all side views of the wind turbine 1 with the wind turbine blades 5 arranged at three different pivot angles. Fig. 4 shows the wind turbine blades 5 at minimum pivot angle, Fig. 6 shows the wind turbine blades 5 at maximum pivot angle, or barrel mode, and Fig. 5 shows the wind turbine blades 5 at an intermediate pivot angle.

The wind turbine blades 5 of the wind turbine 1 of Figs. 4-6 are angled in the sense that the inner portion and the outer portion of the wind turbine blade 5 extend from the hinge 6 along different directions, forming an angle there between.

Figs. 7 and 8 show details of a biasing mechanism for applying a biasing force to wind turbine blades 5 of a wind turbine, e.g. the wind turbine 1 of Figs. 1-3 or the wind turbine 1 of Figs. 4-6.

Fig. 7 shows a portion of a blade carrying structure 4 and a portion of a wind turbine blade 5. The wind turbine blade 5 is pivotally mounted on the blade carrying structure 4 via a hinge (not shown). A wire 8 is connected to the wind turbine blade 5 at a position between an inner tip end 5a of the wind turbine blade 5 and the position of the hinge. The wire 8 extends from the connecting position at the wind turbine blade 5, via a pulley 10 and along the blade carrying structure 4 towards a hub (not shown).

A biasing force applied by means of the wire 8 pulls the wind turbine blade 5 towards a position defining a minimum pivot angle. In Fig. 7 the wind turbine blade 5 is arranged at the minimum pivot angle. Reducing the biasing force applied by means of the wire 8 will allow the wind turbine blade 5 to more easily pivot towards larger pivot angles.

Fig. 8 is a cross sectional view of part of a hub 3 and part of a nacelle 7. Arms of a blade carrying structure 4 are mounted on the hub 3. The wires 8 which are also illustrated in Fig. 7 are connected to a winch mechanism 11 arranged in the hub 3. Thereby the biasing force applied by means of the wires 8 can be adjusted by rotating the winch mechanism 11, thereby adjusting the length of the wires 8.

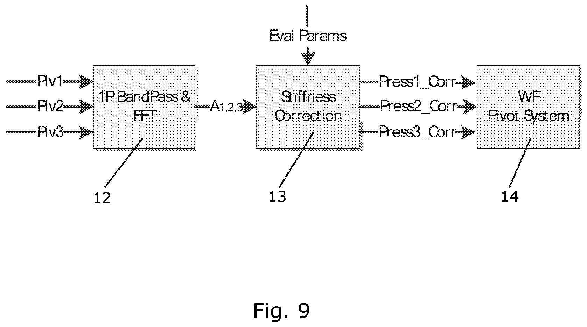

Fig. 9 is a block diagram illustrating a method according to an embodiment of the invention. Pivot angles, Piv1, Piv2 and Piv3, for three wind turbine blades are measured and supplied to a bandpass filter block 12. In the bandpass filter block 12, the measured pivot angles are analysed in order to derive the frequency content of the measured values, in particular information regarding 1P frequencies. Based on this analysis, the bandpass filter block 12 outputs a signal indicating that a rotor unbalance is present, and transmits this to a stiffness correction block 13.

In response thereto, and based on a set of evaluation parameters, the stiffness correction block 13 selects at least one of the wind turbine blades and adjusts a biasing force setpoint for the selected wind turbine blade(s). Finally, the stiffness correction block 13 transmits biasing force setpoints to a pivot control unit 14, and the pivot control unit 14 controls the biasing mechanism in accordance with the received setpoints.

In the embodiment illustrated in Fig. 9, the biasing mechanism is of a kind which comprises hydraulic mechanisms, and the biasing force setpoints are in the form of pressure setpoints for the hydraulic mechanisms.

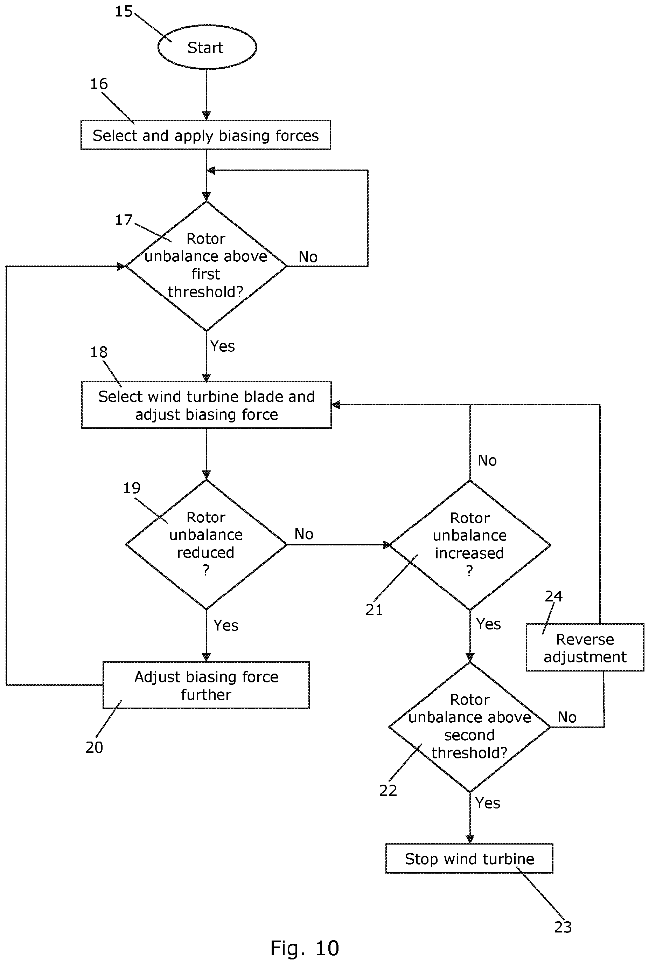

Fig. 10 is a flow chart illustrating a method according to an embodiment of the invention. The process is started at step 15. At step 16, biasing forces are selected for each wind turbine blade, and the selected biasing forces are applied to the respective wind turbine blades.

At step 17 rotor unbalance of the wind turbine is monitored, and it is investigated whether or not the rotor unbalance is above a first threshold. This could, e.g., include monitoring pivot angles, accelerations and/or deflections of the nacelle and/or an upper part of the tower, torque on the main shaft and/or the generator shaft, etc., as described above.

In the case that step 17 reveals that the rotor unbalance is not above the first threshold, the wind turbine continues operating in a normal manner, and monitoring of the rotor unbalance is continued.

In the case that step 17 reveals that the rotor unbalance exceeds the first threshold value, it is concluded that the rotor unbalance is at a level which requires action. Therefore, the process is forwarded to step 18, where at least one of the wind turbine blades is selected, and the biasing force applied to the selected wind turbine blade is adjusted, in order to attempt to counteract the rotor unbalance. For instance, the selected wind turbine blade may be a wind turbine blade which somehow differs from the other wind turbine blades, e.g. a wind turbine blade with a pivot angle, pivot angle movement pattern, or similar, which differs significantly from that of the other wind turbine blades. As an alternative, a random wind turbine blade may be selected.

At step 19 it is investigated whether or not the performed adjustment of the biasing force has caused a reduction in the rotor unbalance. If this is the case, it can be concluded that the selected strategy is effective, and the process is therefore forwarded to step 20, where the biasing force of the selected wind turbine blade is adjusted further in the same direction, in order to further reduce the rotor unbalance. Subsequently, the process is returned to step 17 in order to investigate whether or not the rotor unbalance has been reduced to a level below the first threshold.

In the case that step 19 reveals that the rotor unbalance has not been reduced, it can be concluded that the performed adjustment of the biasing force has been non-affective to the rotor unbalance, or it might even have increased the rotor unbalance, thereby making the problem worse instead of solving it. The biasing force should therefore not be adjusted further in the same manner. Instead, the process is forwarded to step 21, where it is investigated whether or not the rotor unbalance has increased as a result of the performed adjustment of the biasing force. If this is not the case, it can be concluded that the performed adjustment of the biasing force had no effect on the rotor unbalance, i.e. it has not solved the problem, but it has neither made the problem worse.

Therefore, in this case the process is returned to step 18, where another wind turbine blade is selected, and the procedure described above is performed for this wind turbine blade.

If step 21 reveals that the rotor unbalance has increased as a result of the adjustment of the biasing force, it can be concluded that the performed adjustment of the biasing force has made the problem worse instead of solving it, and further measures are therefore required. Accordingly, the process is forwarded to step 22, where it is investigated whether or not the rotor unbalance has increased to a level above a second threshold, which is higher than the first threshold. If this is the case, this may be an indication that there is an immediate risk of damage to the wind turbine. Therefore, in this case the process is forwarded to step 23, where the wind turbine is stopped. Furthermore, a de-icing procedure may be initiated and/or a service team may be ordered.

In the case that step 22 reveals that the rotor unbalance is not above the second threshold, the process is forwarded to step 24, where the performed adjustments to the biasing force are reversed, before the process is returned to step 18, where another wind turbine blade is selected.

## Claims

1. A method for operating a wind turbine (1), the wind turbine (1) comprising a tower (2), a nacelle (7) mounted on the tower (2) via a yaw system, a hub (3) mounted rotatably on the nacelle (7), the hub (3) comprising a blade carrying structure (4), and one or more wind turbine blades (5) connected to the blade carrying structure (4) via a hinge (6), each wind turbine blade (5) thereby being arranged to perform pivot movements relative to the blade carrying structure (4) between a minimum pivot angle and a maximum pivot angle, wherein the pivot angle determines a diameter of a rotor of the wind turbine,
and the wind turbine (1) further comprising an adjustable biasing mechanism (8, 10, 11) arranged to apply an adjustable biasing force to each wind turbine blade (5) which biases the wind turbine blade (5) towards a position defining minimum pivot angle or towards a position defining maximum pivot angle so that the pivot angle of each wind turbine blade is a result of the balancing between at least the adjustable biasing force and a wind load force acting on the respective wind turbine blade, the method comprising the steps of:
- selecting a biasing force for each wind turbine blade (5) and applying the selected biasing force to the respective wind turbine blades (5),
- operating the wind turbine (1) while monitoring rotor unbalance of the wind turbine (1),
- in the case that the rotor unbalance exceeds a first threshold value:
- selecting at least one of the wind turbine blades (5), and
- adjusting the biasing force applied to the selected wind turbine blade(s) (5).

2. A method according to claim 1, wherein the selected biasing force is applied as a set-point for a desired biasing force for the wind turbine blades.

3. A method according to any of the preceding claims, wherein the adjustable biasing mechanism is arranged so that the pivot angle of each wind turbine blade is a result of a balancing between at least the biasing force and a wind load force acting on the respective wind turbine blade.

4. A method according to any of the preceding claims, wherein the step of monitoring rotor unbalance of the wind turbine (1) comprises monitoring the pivot angle of each wind turbine blade (5).

5. A method according to claim 4, further comprising the step of determining that the rotor unbalance exceeds the first threshold value in the case that a difference in pivot angle between at least two wind turbine blades (5) exceeds a predefined threshold value.

6. A method according to claim 4 or 5, wherein the step of selecting at least one wind turbine blade (5) comprises selecting the wind turbine blade (5) having a pivot angle which differs most from the pivot angles of any of the other wind turbine blades (5).

7. A method according to any of the preceding claims, wherein the step of monitoring rotor unbalance of the wind turbine comprises monitoring accelerations of the nacelle (7) and/or an upper part of the tower (2) along at least one direction.

8. A method according to any of the preceding claims, wherein the step of adjusting the biasing force applied to the selected wind turbine blade(s) (5) comprises adjusting a pulling force applied to a wire (8) connected to each selected wind turbine blade (5).

9. A method according to any of the preceding claims, further comprising the steps of:
- after adjusting the biasing force applied to the selected wind turbine blade(s) (5), monitoring the rotor unbalance of the wind turbine (1),
- in the case that the rotor unbalance decreases, adjusting the biasing force applied to the selected wind turbine blade(s) (5) further, and
- in the case that the rotor unbalance increases, reversing the adjustment of the biasing force applied to the selected wind turbine blade(s) (5).

10. A method according to any of the preceding claims, further comprising the steps of:
- after adjusting the biasing force applied to the selected wind turbine blade(s) (5), monitoring the rotor unbalance of the wind turbine (1),
- in the case that the rotor unbalance increases or remains unchanged, selecting at least one further wind turbine blade (5), and
- adjusting the biasing force applied to the further wind turbine blade(s) (5).

11. A method according to any of the preceding claims, further comprising the step of stopping the wind turbine (1) in the case that the rotor unbalance exceeds a second threshold value, the second threshold value being larger than the first threshold value.

12. A method according to any of the preceding claims, wherein the first threshold value is variable as a function of ambient temperature and/or humidity.

13. A method according to any of the preceding claims, wherein the step of adjusting the biasing force applied to the selected wind turbine blade(s) (5) is performed based on ambient temperature and/or humidity.

## Patentansprüche

1. Verfahren zum Betreiben einer Windkraftanlage (1), wobei die Windkraftanlage (1) einen Turm (2), eine über ein Giersystem auf dem Turm (2) angebrachte Gondel (7), eine auf der Gondel (7) drehbar angebrachte Nabe (3), wobei die Nabe (3) eine Blattträgerstruktur (4) umfasst, und ein oder mehrere Windkraftanlagenblätter (5) umfasst, die über ein Scharnier (6) mit der Blattträgerstruktur (4) verbunden sind, wobei jedes Windkraftanlagenblatt (5) dadurch so eingerichtet ist, dass es Schwenkbewegungen relativ zu der Blattträgerstruktur (4) zwischen einem minimalen Schwenkwinkel und einem maximalen Schwenkwinkel durchführt, wobei der Schwenkwinkel einen Durchmesser eines Rotors der Windkraftanlage bestimmt,
und wobei die Windkraftanlage (1) weiter einen anpassbaren Vorspannmechanismus (8, 10, 11) umfasst, der so eingerichtet ist, dass er eine anpassbare Vorspannkraft auf jedes Windkraftanlagenblatt (5) aufbringt, die das Windkraftanlagenblatt (5) in Richtung einer Position vorspannt, die einen minimalen Schwenkwinkel definiert, oder in Richtung einer Position, die einen maximalen Schwenkwinkel definiert, sodass der Schwenkwinkel jedes Windkraftanlagenblatts ein Ergebnis des Ausgleichens zwischen mindestens der anpassbaren Vorspannkraft und einer Windlastkraft ist, die auf das jeweilige Windkraftanlagenblatt wirkt, wobei das Verfahren die folgenden Schritte umfasst:
- Auswählen einer Vorspannkraft für jedes Windkraftanlagenblatt (5) und Aufbringen der ausgewählten Vorspannkraft auf die jeweiligen Windkraftanlagenblätter (5),
- Betreiben der Windkraftanlage (1) unter Überwachung der Rotorunwucht der Windkraftanlage (1),
- in dem Fall, dass die Rotorunwucht eine erste Schwelle überschreitet:
- Auswählen mindestens eines der Windkraftanlagenblätter (5), und
- Anpassen der Vorspannkraft, die auf das ausgewählte Windkraftanlagenblatt bzw. die ausgewählten Windkraftanlagenblätter (5) aufgebracht wird.

2. Verfahren nach Anspruch 1, wobei die ausgewählte Vorspannkraft als ein Sollwert für eine gewünschte Vorspannkraft für die Windkraftanlagenblätter aufgebracht wird.

3. Verfahren nach einem der vorstehenden Ansprüche, wobei der anpassbare Vorspannmechanismus so eingerichtet ist, dass der Schwenkwinkel jedes Windkraftanlagenblatts aus einem Ausgleich zwischen mindestens der Vorspannkraft und einer auf das jeweilige Windkraftanlagenblatt einwirkenden Windlastkraft resultiert.

4. Verfahren nach einem der vorstehenden Ansprüche, wobei der Schritt des Überwachens der Rotorunwucht der Windkraftanlage (1) das Überwachen des Schwenkwinkels jedes Windkraftanlagenblattes (5) umfasst.

5. Verfahren nach Anspruch 4, weiter umfassend den Schritt des Bestimmens, dass die Rotorunwucht die erste Schwelle überschreitet, in dem Fall, dass eine Differenz im Schwenkwinkel zwischen mindestens zwei Windkraftanlagenblättern (5) einen vordefinierten Schwellenwert überschreitet.

6. Verfahren nach Anspruch 4 oder 5, wobei der Schritt des Auswählens mindestens eines Windkraftanlagenblattes (5) das Auswählen des Windkraftanlagenblattes (5) umfasst, das einen Schwenkwinkel aufweist, der sich am stärksten von den Schwenkwinkeln der anderen Windkraftanlagenblätter (5) unterscheidet.

7. Verfahren nach einem der vorstehenden Ansprüche, wobei der Schritt des Überwachens der Rotorunwucht der Windkraftanlage das Überwachen von Beschleunigungen der Gondel (7) und/oder eines oberen Teils des Turms (2) entlang mindestens einer Richtung umfasst.

8. Verfahren nach einem der vorstehenden Ansprüche, wobei der Schritt des Anpassens der Vorspannkraft, die auf das ausgewählte Windkraftanlagenblatt bzw. die ausgewählten Windkraftanlagenblätter (5) aufgebracht wird, das Anpassen einer Zugkraft umfasst, die auf einen Draht (8) aufgebracht wird, der mit jedem ausgewählten Windkraftanlagenblatt (5) verbunden ist.

9. Verfahren nach einem der vorstehenden Ansprüche, weiter umfassend die folgenden Schritte:
- nach dem Anpassen der Vorspannkraft, die auf das ausgewählte Windkraftanlagenblatt bzw. die ausgewählten Windkraftanlagenblätter (5) aufgebracht wird, Überwachen der Rotorunwucht der Windkraftanlage (1),
- in dem Fall, dass die Rotorunwucht abnimmt, Anpassen der Vorspannkraft, die auf das ausgewählte Windkraftanlagenblatt bzw. die ausgewählten Windkraftanlagenblätter (5) aufgebracht wird, weiter, und
- in dem Fall, dass die Rotorunwucht zunimmt, Umkehren der Anpassung der Vorspannkraft, die auf das ausgewählte Windkraftanlagenblatt bzw. die ausgewählten Windkraftanlagenblätter (5) aufgebracht wird.

10. Verfahren nach einem der vorstehenden Ansprüche, weiter umfassend die folgenden Schritte:
- nach dem Anpassen der Vorspannkraft, die auf das ausgewählte Windkraftanlagenblatt bzw. die ausgewählten Windkraftanlagenblätter (5) aufgebracht wird, Überwachen der Rotorunwucht der Windkraftanlage (1),
- in dem Fall, dass die Rotorunwucht zunimmt oder unverändert bleibt, Auswählen mindestens eines weiteren Windkraftanlagenblattes (5), und
- Anpassen der Vorspannkraft, die auf das weitere Windkraftanlagenblatt bzw. die weiteren Windkraftanlagenblätter (5) aufgebracht wird.

11. Verfahren nach einem der vorstehenden Ansprüche, weiter umfassend den Schritt des Anhaltens der Windkraftanlage (1) in dem Fall, dass die Rotorunwucht einen zweiten Schwellenwert überschreitet, wobei der zweite Schwellenwert größer ist als der erste Schwellenwert.

12. Verfahren nach einem der vorstehenden Ansprüche, wobei der erste Schwellenwert in Abhängigkeit von der Umgebungstemperatur und/oder der Luftfeuchtigkeit variabel ist.

13. Verfahren nach einem der vorstehenden Ansprüche, wobei der Schritt des Anpassens der auf das ausgewählte Windkraftanlagenblatt bzw. die ausgewählten Windkraftanlagenblätter (5) aufgebrachten Vorspannkraft basierend auf der Umgebungstemperatur und/oder Feuchtigkeit durchgeführt wird.

## Revendications

1. Procédé de fonctionnement d'une éolienne (1), l'éolienne (1) comprenant une tour (2), une nacelle (7) montée sur la tour (2) via un système de lacet, un moyeu (3) monté rotatif sur la nacelle (7), le moyeu (3) comprenant une structure de support de pales (4), et une ou plusieurs pales d'éolienne (5) reliées à la structure de support de pales (4) via une articulation (6), chaque pale d'éolienne (5) étant ainsi disposée pour effectuer des mouvements pivotants par rapport à la structure de support de pales (4) entre un angle de pivotement minimum et un angle de pivotement maximum, dans lequel l'angle de pivotement détermine un diamètre d'un rotor de l'éolienne,
et l'éolienne (1) comprenant en outre un mécanisme de sollicitation ajustable (8, 10, 11) agencé pour appliquer une force de sollicitation ajustable à chaque pale d'éolienne (5) qui sollicite la pale d'éolienne (5) vers une position définissant un angle de pivotement minimal ou vers une position définissant un angle de pivotement maximal de telle façon que l'angle de pivotement de chaque pale d'éolienne est un résultat de l'équilibrage entre au moins la force de sollicitation ajustable et une force de charge de vent agissant sur la pale d'éolienne respective, le procédé comprenant les étapes de :
- sélection d'une force de sollicitation pour chaque pale d'éolienne (5) et application de la force de sollicitation sélectionnée aux pales d'éolienne (5) respectives,
- fonctionnement de l'éolienne (1) tout en surveillant un déséquilibre du rotor de l'éolienne (1),
- au cas où le déséquilibre du rotor dépasse une première valeur seuil :
- sélection d'au moins une des pales d'éolienne (5), et
- ajustement de la force de sollicitation appliquée aux une ou plusieurs pales d'éolienne (5) sélectionnées.

2. Procédé selon la revendication 1, dans lequel la force de sollicitation sélectionnée est appliquée à titre de point de consigne pour une force de sollicitation désirée pour les pales d'éolienne.

3. Procédé selon l'une quelconque des revendications précédentes, dans lequel le mécanisme de sollicitation ajustable est agencé de telle façon que l'angle de pivotement de chaque pale d'éolienne est un résultat d'un équilibrage entre au moins la force de sollicitation et une force de charge de vent agissant sur la pale d'éolienne respective.

4. Procédé selon l'une quelconque des revendications précédentes, dans lequel l'étape de surveillance d'un déséquilibre du rotor de l'éolienne (1) comprend la surveillance de l'angle de pivotement de chaque pale d'éolienne (5).

5. Procédé selon la revendication 4, comprenant en outre l'étape consistant à déterminer que le déséquilibre du rotor dépasse la première valeur seuil au cas où une différence d'angle de pivotement entre au moins deux pales d'éolienne (5) dépasse une valeur seuil prédéfinie.

6. Procédé selon la revendication 4 ou 5, dans lequel l'étape de sélection d'au moins une pale d'éolienne (5) comprend la sélection de la pale d'éolienne (5) présentant un angle de pivotement qui diffère le plus des angles de pivotement d'un nombre quelconque des autres pales d'éolienne (5).

7. Procédé selon l'une quelconque des revendications précédentes, dans lequel l'étape de surveillance d'un déséquilibre du rotor de l'éolienne comprend la surveillance d'accélérations de la nacelle (7) et/ou d'une partie supérieure de la tour (2) dans au moins une direction.

8. Procédé selon l'une quelconque des revendications précédentes, dans lequel l'étape d'ajustement de la force de sollicitation appliquée aux une ou plusieurs pales d'éolienne (5) sélectionnées comprend l'ajustement d'une force de traction appliquée à un câble (8) relié à chaque pale d'éolienne (5) sélectionnée.

9. Procédé selon l'une quelconque des revendications précédentes, comprenant en outre les étape suivantes :
- après ajustement de la force de sollicitation appliquée aux une ou plusieurs pales d'éolienne (5) sélectionnées, surveiller le déséquilibre du rotor de l'éolienne (1),
- au cas où le déséquilibre du rotor diminue, ajuster davantage la force de sollicitation appliquée aux une ou plusieurs pales d'éolienne (5) sélectionnées, et
- au cas où le déséquilibre du rotor augmente, inverser l'ajustement de la force de sollicitation appliquée aux une ou plusieurs pales d'éolienne (5) sélectionnées.

10. Procédé selon l'une quelconque des revendications précédentes, comprenant en outre les étape suivantes :
- après ajustement de la force de sollicitation appliquée aux une ou plusieurs pales d'éolienne (5) sélectionnées, surveiller le déséquilibre du rotor de l'éolienne (1),
- au cas où le déséquilibre du rotor augmente ou demeure inchangé, sélectionner au moins une autre pale d'éolienne (5), et
- ajuster la force de sollicitation appliquée aux une ou plusieurs autres pales d'éolienne (5).

11. Procédé selon l'une quelconque des revendications précédentes, comprenant en outre l'étape de mise à l'arrêt de l'éolienne (1) au cas où le déséquilibre du rotor dépasse une seconde valeur seuil, la seconde valeur seuil étant supérieure à la première valeur seuil.

12. Procédé selon l'une quelconque des revendications précédentes, dans lequel la première valeur seuil est variable en fonction de la température ambiante et/ou de l'humidité ambiante.

13. Procédé selon l'une quelconque des revendications précédentes, dans lequel l'étape d'ajustement de la force de sollicitation appliquée aux une ou plusieurs pales d'éolienne (5) sélectionnées est exécutée sur la base de la température ambiante et/ou de l'humidité ambiante.
